Europäisches Patentamt

(19) European Patent Office

Office européen des brevets

(11) EP 0 728 767 A1

## (12) EUROPEAN PATENT APPLICATION

(43) Date of publication:
28.08.1996 Bulletin 1996/35

(51) Int. Cl.$^6$: C08F 8/32

(21) Application number: 96200442.0

(22) Date of filing: 21.02.1996

(84) Designated Contracting States:
AT BE CH DE DK ES FR GB IT LI NL SE

(30) Priority: 27.02.1995 BE 9500167

(71) Applicant: DSM N.V.
6411 TE Heerlen (NL)

(72) Inventors:
- Van den Berg, Hendrik Jan
  NL-6438 HZ Schinnen (NL)
- Mutsers, Stanislaus Martinus Petrus
  NL-6166 EH Geleen (NL)
- Stroeks, Alexander Antonius Marie
  NL-6301 GP Valkenburg (L.) (NL)

(54) **Process for the imidisation of an SMA polymer**

(57) The invention relates to a process for the imidisation of an SMA polymer in a continuous mixing and/or kneading apparatus for polymer melts in which process a polymer melt which contains an SMA polymer comprising
10-50 mol.% MA
50-90 mol.% styrene
0-30 mol.% of a third monomer, and which contains, per 100 parts by weight of the SMA copolymer, 0.01-2.0 parts by weight of catalyst and 0-5 parts by weight of volatile components is conveyed through the apparatus, an aromatic amine is added to the polymer melt through one or more feed openings in the wall of the apparatus and is mixed with the polymer melt, the polymer melt is degassed downstream in the apparatus, and as catalyst use is made of an acid with pKa < 2.

EP 0 728 767 A1

## Description

The invention relates to a process for the imidisation of an SMA polymer in a continuous mixing and/or kneading apparatus for polymer melts in which process a polymer melt which contains an SMA polymer comprising

10-50 mol.% MA (maleic anhydride)

50-90 mol.% styrene

0-30 mol.% of a third monomer, and which contains 0.01-0.2 parts by weight of catalyst and 0-5 parts by weight of volatile components per 100 parts by weight of the SMA copolymer is conveyed through the apparatus,

an aromatic amine is added to the polymer melt through one or more feed openings in the wall of the apparatus and is mixed with the polymer melt, and the polymer melt is degassed downstream in the apparatus.

Such a process is known from JP-A-06056921. SMA polymers have the drawback that their thermal stability is insufficient, especially when their MA content is high, and as a consequence SMA polymers split off carbon dioxide at elevated temperature. If SMA polymers are wholly or partly imidised, their thermal stability is improved.

A drawback of the known process is that, although the thermal stability has improved, the resulting imidised SMA polymer is not very suitable for forming part of a polymer composition containing the imidised SMA, styrene acrylonitrile polymer (SAN) and/or styrene acrylonitrile butadiene polymer (ABS). The polymer composition thus obtained has a high viscosity, which increases even further during heating of the polymer composition, so that it is difficult to process the polymer composition into mouldings, in particular thin-walled mouldings or mouldings of a complex geometry.

The invention aims to provide a process that does not have the above-mentioned drawback.

This aim is achieved, surprisingly, by imidising the SMA polymer according to the above-mentioned process, as catalyst use being made of an acid with pKa < 2. The pKa is measured in an aqueous solution at a temperature of 20°C.

The imidised SMA polymer thus obtainable is very suitable for forming part of a polymer composition containing the imidised SMA copolymer, SAN and/or ABS and nevertheless it has a good thermal stability. The polymer composition has a low viscosity, which shows no or hardly any further increase even while the polymer composition is at an elevated temperature.

Another advantage of the process according to the invention is that the impact strength of the polymer composition is higher than that of a polymer composition containing an imidised SMA polymer obtained by the known process.

Yet another advantage of the process according to the invention is that the colour of the resulting imidised SMA polymer is less brown than that of the imidised SMA obtained according to the known process.

During the process according to the invention the temperature of the polymer melt may be 225-350°C.

The SMA polymer that is imidised by the process according to the invention can be polymerised by one of the known processes from maleic anhydride, monostyrene and optionally a third monomer, such as alpha-methyl styrene, acrylonitrile, an acrylic acid ester, such as butyl acrylate or methyl methacrylate. Batch polymerisation of styrene and maleic anhydride generally yields an alternating copolymer. SMA polymers with a maleic anhydride content below 50 mol.% can be prepared by continuous polymerisation. The reader is referred to A.W. Hansen and R.L. Zimmermann, Industrial & Engineering Chemistry, Vol. 49, No. 11, pp. 1803-1807, 1957, among other publications.

The SMA polymer preferably has a weight-average molecular weight of from 10,000 to 500,000, more preferably of from 70,000 to 175,000 kg/mol.

As continuous mixing or kneading apparatus use can be made for instance of a single-screw extruder, a twin-screw extruder with co-rotating or contra-rotating screws, a Buss® Kokneader, a Farrell® kneader, or a static mixer. It is also possible, for instance, for the apparatus to consist of two connected extruders or an extruder connected with a static mixer.

Preferably a co-rotating twin-screw extruder is used.

Degassing of the polymer melt can take place by means of a special degassing opening in the wall of the apparatus or at the outlet opening of the apparatus.

It is possible for the apparatus to be fed with the SMA copolymer in solid form, such as a powder or a granulate, in which case the SMA copolymer is melted and heated to the reaction temperature, following which the process according to the invention is carried out downstream in the apparatus. The catalyst can be mixed with the polymer granulate or the polymer powder. The catalyst can also be added to the polymer melt through a feed opening in the wall of the apparatus.

It is also possible for the apparatus to be fed with molten SMA polymer directly from equipment for the preparation of the SMA polymer, the polymer melt having been degassed before the aromatic amine and the catalyst are added and still containing 0 to 5 parts by weight of volatile components per 100 parts by weight of SMA polymer. Volatile components may be, for instance, solvent used in the polymerisation process and unreacted monomers of the polymer.

Each known SAN or ABS is eligible for forming part of the polymer composition which contains the imidised SMA copolymer, obtained by the process according to the invention, SAN and/or ABS.

The SAN used generally contains 2-50 wt.%, preferably 20-27 wt.%, acrylonitrile and 50-98 wt.% styrene. In addition, the SAN used may contain minor amounts, for instance up to 20 wt.%, of one or more other monomers, such as alpha-methyl styrene, methyl methacrylate or maleic anhydride. The SAN preferably has a weight-average molecular weight of between 30,000 and 150,000 kg/kmol.

The ABS used contains, for instance, 20-80 wt.% polybutadiene rubber grafted with 80-20 wt.% of a mixture which in itself contains 50-98 wt.% styrene and 2-50 wt.% acrylonitrile. The mixture may also contain minor amounts, for instance up to 20 wt.%, of one or more other monomers, such as alpha-methyl styrene, methyl methacrylate, maleic anhydride. In place of butadiene rubber, use can also be made of another rubber, for instance EPDM rubber or SBS rubber.

The amount of catalyst that is supplied usually amounts to 0.01-2.0 parts by weight per 100 parts by weight of SMA polymer, preferably 0.02-1.0 part by weight per 100 parts by weight of SMA polymer.

The aromatic amine is preferably added in an amount of 30-100 mol.% of the maleic anhydride contained in the SMA polymer.

If more than 100 mol.% of the aromatic amine is supplied, its conversion is very incomplete, so that the residual aromatic monomer has to be degassed from the polymer melt in a complicated manner and has to be separated from the rest of the degassing mixture by means of complicated equipment. If less than 30 mol.% of the aromatic amine is added, the thermal stability of the imidised SMA polymer is poor. Preferably the average residence time of the polymer melt between the last feed opening - viewed in the direction of flow - and the degassing location is so great that at least 90%, and preferably at least 95%, of the aromatic amine is converted.

The desired average residence time can be reached in various ways. One way of achieving the desired average residence time is to choose a sufficiently large distance between the injection port and the degassing location. It is also possible, for instance, to obtain the desired average residence time by means of the flow rate setting.

A further improved imidised SMA copolymer is obtained if the amount of catalyst that is supplied amounts to 0.03-0.3, and more preferably 0.05-0.2 part by weight per 100 parts by weight of SMA copolymer. By adding this relatively small amount of catalyst a further improvement of the impact strength of a polymer composition containing the imidised SMA polymer and SAN and/or ABS is achieved.

Since the reaction velocity is low when the amount of catalyst is relatively small, a long residence time has to be chosen. Preferably, a residence time of 250-600 seconds is chosen. With such a long residence time, an extruder with a static mixer is preferably used for carrying out the process.

The polymer melt preferably has a temperature of between 250-320°C. This yields an SMA copolymer that is even more suitable for being mixed with SAN and/or ABS.

Very good results are achieved if a sulphonic acid, preferably paratoluene sulphonic acid, is used as catalyst. This is advantageous in that the catalyst can suitably be premixed with the aromatic amine, after which the mixture is added to the polymer melt. This way a faster and more homogeneous catalyst distribution over the polymer melt is obtained.

Examples of aromatic amines that can be used in the process according to the invention are alpha-naphthyl amine, beta-naphthyl amine, aniline or a substituted aniline.

Preferably, aniline is used.

In a preferred embodiment the process according to the invention is carried out using an SMA polymer that consists of 18-35 mol.% MA and 65-82 mol.% styrene and aniline is injected in an amount of 0.40-0.80 mol relative to 1 mol of MA in the SMA copolymer.

This ensures that the injected aniline is converted already after a relatively short residence time, so that a high feed rate can be chosen and the mixing apparatus can be of a simple design. Furthermore, the resulting imidised SMA polymer is even better miscible with SAN and ABS and the polymer composition has a low viscosity, a good impact strength and a good thermal stability.

In another preferred embodiment the process according to the invention is carried out using an SMA copolymer consisting of 28-38 mol.% MA and 62-72 mol.% styrene and aniline is injected in an amount of 80-100 mol.% relative to the MA contained in the SMA copolymer.

This yields an imidised SMA copolymer that is highly suitable for forming part of a polymer composition containing a polyamide. Such a polymer composition has a good impact strength and a low viscosity, so that the polymer composition is highly suitable for processing into large, thin-walled mouldings or mouldings of a complex geometry.

Any known polyamide is eligible to form part of the polymer composition.

Preferably, use is made of nylon 6.6 or nylon 4.6. More preferably, use is made of nylon 6.

Materials and test methods used in the examples:

- SMA: a copolymer of styrene and maleic anhydride with a maleic anhydride content of 28 wt.% and a weight-average molecular weight of 130,000 kg/kmol.
- ABS: Ronfalin® TZ 220, supplied by DSM, the Netherlands.
- SSL: a spiral flow test, in which the polymer mixture is injection moulded using an Arburg injection moulding machine®, type 220-90-350, supplied by Arburg, Switzerland. The mould used is a spiral flow mould, the spiral having a thickness of 1.6 mm and a width of 8 mm.
  The barrel temperature of the injection moulding machine is 250°C and the mould temperature 70°C. The cycle time is 40 sec. and the injection speed 130 mm/sec.

Injection moulding takes place in cycles, with the length of the resulting spiral being continuously measured until the injection moulding process has reached an equilibrium situation (when the length of the successive spirals has reached a constant value). The length of the injection-moulded spiral is taken to be the result of the measurement. This length is a measure of the viscosity of the polymer composition in a mould.

- LDT: special spiral flow test for determination of the viscosity of the polymer composition after a certain residence time at an elevated temperature.

In the test, spirals are injection moulded in cycles until the equilibrium situation is reached, under the same conditions as described above for the SSL test. After this, the polymer composition is kept at 250°C for an interim period of 3 minutes before a spiral is injection moulded again. This procedure is repeated, with each interim period being 3 minutes longer than the previous one, until the spiral length has again reached a constant value. The spiral length was found to have decreased, and so the viscosity of the polymer melt increased, as a result of the residence time at 250°C. The decrease in spiral length expressed according to:

$$\frac{\text{SSL spiral length - LDT spiral length}}{\text{SSL spiral length}} + 100\%$$

is a measure of the increase in viscosity.

This test is used to simulate the injection moulding of large mouldings involving long cycle times. In addition, process interruptions, for instance due to equipment breakdowns, are simulated.

- Silver streaks: test for determination of the surface quality of an injection-moulded panel. Injection-moulded panel measuring 64*64*3.2 mm are produced by means of the above-mentioned Arburg injection moulding machine®. The wall temperature is 280°C and the interim period 30 minutes. The other conditions are as described for the SSL test. the surface quality is determined on the basis of six standard panels containing a decreasing number of silver streaks in their surface.
5: very many silver streaks
10: no silver streaks.
The number of silver streaks is a measure of the thermal stability of the polymer composition.

Notched Izod impact strength, at 23°C according to ISO 180.

<u>Example I</u>

SMA was fed in granulate form through the feed opening of a co-rotating twin-screw extruder with a screw diameter of 30 mm and a length of 39 D (diameter), supplied by W&P®, of Germany. A mixture of aniline and paratoluene sulphonic acid was added to the polymer melt via an injection port at the end of the melting zone, at a distance from the feed opening of 8.4 D, viewed in downstream direction. Through a vent, at a distance of 19.6 D downstream from the feed opening, the unreacted aniline was removed from the polymer melt, which after leaving the extruder was cooled down and processed into granulate by means of a Scheer granulator®. The screw speed was 120 rpm and the barrel temperature 250°C.
The amount of SMA fed to the extruder was 6 kg/h. The amount of aniline that was fed was enough to raise the thermal stability of the imidised SMA polymer to such a level that a value of about 8 was reached in the silver streak test (measured at the SMA/ABS composition as described below), which means it was 1.12 kg/h. The amount of paratoluene sulphonic acid added was 21 g/h.
The resulting imidised SMA polymer was mixed with ABS in a weight ratio of 35 : 65, to which end the polymers were premixed in dry form, as a granulate, and the granulate mixture was processed using a co-rotating twin-screw extruder with a screw diameter of 30 mm and a length of 28 D. After leaving the extruder the resulting polymer composition was cooled down and granulated using a Scheer granulator®.
The resulting granulate was subjected to the above-mentioned tests. The results are presented in Table 1.

<u>Comparative experiment A</u>

An experiment was conducted as in Example I, but as catalyst sodium benzoate in the form of an aqueous solution was injected into the melt through a separate injection port at a distance of 8.4 D from the feed opening. The amount of SMA fed to the extruder was 6 kg/h.
The amount of aniline supplied was enough to raise the thermal stability of the imidised SMA polymer to such a level that a value of about 8 was reached in the silver streak test, which means it was 0.67 kg/h. The amount of sodium benzoate added was 36 g/h.
The results are presented in Table 1.

Comparative experiment B

An experiment was conducted as in Example I, but as catalyst 1,4-di-azobicyclo-octane (DABCO) was used.
The amount of SMA fed to the extruder was 6 kg/h. The amount of aniline supplied was enough to raise the thermal stability of the imidised SMA polymer to such a level that a value of about 8 was reached in the silver streak test, which means it was 0.67 kg/h. The amount of DABCO added was 6 g/h.
The results are presented in Table 1.

Example II

An experiment was conducted as in Example I, but as catalyst use was made of phenyl phosphonic acid, which had been mixed with the SMA granulate.
The amount of SMA fed to the extruder was 6 kg/h. The amount of aniline supplied was enough to raise the thermal stability of the imidised SMA polymer to such a level that a value of about 8 was reached in the silver streak test, which means it was 1.12 kg/h. The amount of phenyl phosphonic acid added was 19 g/h.
The results are presented in Table 1.

Table 1

| Example/Comp. Exp. | Catalyst | pKa (-) | SSL (mm) | LDT (%) | silver streaks (-) | notched izod (kJ/m$^2$) |
|---|---|---|---|---|---|---|
| I | PTSA | -5 | 310 | 15 | 8.0 | 20 |
| A | DABCO | 11.8 | 250 | 43 | 8.5 | 19 |
| B | Na benzoate | 4.2 | 250 | 35 | 7.5 | |
| II | phenyl phosphonic acid | 1.8 | 290 | 30 | 8.0 | |
| C | DABCO | 11.8 | 280 | 31 | 9.0 | 15 |

The SSL test and the LDT test prove that with a catalyst having a pKa < 2 a lower viscosity is achieved. In addition, the LDT test proves that very advantageous results are achieved in the LDT test in particular with PTSA as catalyst.

Comparative experiment C

An experiment was conducted as in comparative experiment B, however aniline was injected in an amount of 1.12 kg/h.

**Claims**

1. Process for the imidisation of an SMA polymer in a continuous mixing and/or kneading apparatus for polymer melts in which process a polymer melt which contains an SMA polymer comprising
   10-50 mol.% MA
   50-90 mol.% styrene
   0-30 mol.% of a third monomer, and which contains, per 100 parts by weight of the SMA copolymer, 0.01-2.0 parts by weight of catalyst and 0-5 parts by weight of volatile components is conveyed through the apparatus, an aromatic amine is added to the polymer melt through one or more feed openings in the wall of the apparatus and is mixed with the polymer melt, and the polymer melt is degassed downstream in the apparatus, this process being characterised in that as catalyst use is made of an acid with pKa < 2.

2. Process according to claim 1, characterised in that the aromatic amine is added in an amount of 30-100 mol.% of the MA contained in the SMA polymer.

3. Process according to claim 2, characterised in that the average residence time of the polymer melt between the last feed opening, viewed in the direction of flow, and the degassing location is chosen such that at least 90% of the aromatic amine is converted.

4. Process according to any one of claims 1-3, characterised in that the amount of catalyst that is supplied amounts to 0.03-0.3 part by weight per 100 parts by weight of SMA copolymer.

5. Process according to any one of claims 1-4, characterised in that the temperature of the polymer melt is 250-320°C.

6. Process according to any one of claims 1-5, characterised in that a sulphonic acid is used as catalyst.

7. Process according to any one of claims 1-6, characterised in that paratoluene sulphonic acid is used as catalyst.

8. Process according to any one of claims 1-7, characterised in that aniline is used as aromatic amine.

9. Process according to claim 8, characterised in that the SMA polymer consists of
18-35 mol.% MA
65-82 mol.% styrene
and in that aniline is injected in an amount of 40 - 80 mol.% relative to the MA contained in the SMA polymer.

10. Process according to claim 8, characterised in that the SMA polymer consists of
28-38 mol.% MA
62-72 mol.% styrene
and in that aniline is injected in an amount of 80 - 100 mol.% relative to the MA contained in the SMA polymer.

11. Process for the preparation of a polymer composition in which the process of any one of claims 1-10 is carried out in a first step, following which the resulting imidised SMA polymer is mixed with SAN and/or ABS.

12. Polymer obtainable according to the process according to any one of claims 1-10.

## EUROPEAN SEARCH REPORT

| | | European Patent Office | | EUROPEAN SEARCH REPORT | | Application Number EP 96 20 0442 |

**DOCUMENTS CONSIDERED TO BE RELEVANT**

| Category | Citation of document with indication, where appropriate, of relevant passages | Relevant to claim | CLASSIFICATION OF THE APPLICATION (Int.Cl.6) |
|---|---|---|---|
| Y | DE-A-34 30 802 (BAYER AG)<br>* page 7, line 6 - page 8, line 3 *<br>* page 8, line 24 - line 29 *<br>* page 9, line 21 - line 26 *<br>* page 10, line 4 - page 11, line 23; claims 1-4 *<br>--- | 1-12 | C08F8/32 |
| Y | EP-A-0 328 140 (MONTEDIPE S.P.A.)<br>* page 3, line 6 - line 35; claims 1-12 *<br>--- | 1-12 | |
| Y | WO-A-93 12148 (EXXON CHEMICAL PATENTS INC.)<br>* page 12, paragraph 3 - paragraph 4 *<br>* page 14, paragraph 2 - paragraph 5 *<br>* page 21, paragraph 3 - page 22, paragraph 1 *<br>* page 23, paragraph 2 - page 26, paragraph 2; claims 1-62 *<br>--- | 1-12 | |
| A | DE-A-24 16 117 (TEXACO DEVELOPMENT CORP.)<br>* claims 1-8 *<br>--- | 1 | TECHNICAL FIELDS SEARCHED (Int.Cl.6) |
| A | JOURNAL OF APPLIED POLYMER SCIENCE, vol. 53, no. 10, 6 September 1994, NEW YORK,<br>pages 1365-1373, XP002001123<br>I. VERMEESCH: "CHEMICAL MODIFICATION OF POLY(STYRENE-CO-MALEIC ANHYDRIDE) WITH PRIMARY N-ALKYLAMINES BY REACTIVE EXTRUSION"<br>* page 1365 - page 1373 *<br>----- | 1 | C08F |

The present search report has been drawn up for all claims

| Place of search | Date of completion of the search | Examiner |
|---|---|---|
| THE HAGUE | 22 April 1996 | Permentier, W |